**Europäisches Patentamt**

**European Patent Office**

**Office européen des brevets**

(19)

(11) Numéro de publication:

**0 110 481**
**A1**

## (12) DEMANDE DE BREVET EUROPEEN

(21) Numéro de dépôt: **83201697.6**

(22) Date de dépôt: **01.12.83**

(51) Int. Cl.³: **H 04 Q 9/14**

(30) Priorité: **03.12.82 FR 8220289**

(43) Date de publication de la demande: **13.06.84**
**Bulletin 84/24**

(84) Etats contractants désignés: **DE FR GB**

(71) Demandeur: **PORTENSEIGNE, 50 rue Roger Salengro Péripole 114, F-94126 Fontenay-sous-Boix Cedex (FR)**

(84) Etats contractants désignés: **FR**

(71) Demandeur: **N.V. Philips' Gloeilampenfabrieken, Groenewoudseweg 1, NL-5621 BA Eindhoven (NL)**

(84) Etats contractants désignés: **DE GB**

(72) Inventeur: **Naaijer, Geert Jan, Société Civile S.P.I.D. 209 rue de l'Université, F-75007 Paris (FR)**

(74) Mandataire: **Landousy, Christian et al, Société Civile S.P.I.D. 209, Rue de l'Université, F-75007 Paris (FR)**

(54) Système d'identification de stations locales par un poste central d'interrogation.

(57) Système d'identification de stations comprenant un poste central d'interrogation (10) et M stations locales (100), (200), (300), etc. . . placées en parallèle les unes par rapport aux autres le long d'un bus de transmission (20) les reliant audit poste central, caractérisé notamment en ce que chaque station locale, telle que (100) par exemple, destinée à recevoir le signal d'interrogation émis par l'étage de sortie du poste central (10) et à renvoyer vers celui-ci un signal de réponse personnalisé traduisant l'état d'un ou de plusieurs circuits de détection présents dans cette station, comprend un circuit de chargement de séquence, prévu pour le stockage temporaire d'un mot numérique d'identification propre à ladite station, une roue codeuse (122) dont les N sorties permettent de définir ledit mot numérique d'identification à N bits avec $2^n$ supérieur ou égal au nombre M des stations, un circuit de discrimination pour la validation de ce mot, un circuit de comparaison entre ledit mot numérique stocké temporairement et un mot numérique de référence, et un circuit de restitution d'informations personnalisées au poste central (10) lorsqu'il y a identité entre les mots comparés.

Application: Systèmes de surveillance et d'interrogation collective

SYSTÈME D'IDENTIFICATION DE STATIONS LOCALES PAR UN POSTE CENTRAL D'INTERROGATION

La présente invention concerne un système d'identification de stations comprenant un poste central d'interrogation et toute une série de stations locales placées en parallèle les unes par rapport aux autres le long d'un bus de transmission les reliant au poste central. Une telle invention trouve des applications importantes notamment dans le domaine de la surveillance, ou encore dans les systèmes d'interrogation collective dont l'emploi se répand pour l'enseignement.

L'invention consiste en effet en un système essentiellement caractérisé :

(A) en ce que l'étage de sortie du poste central, destiné à émettre un signal d'interrogation desdites stations composé d'une impulsion de synchronisation d'une première durée de niveau haut et de M impulsions d'interrogation d'une deuxième durée du niveau haut, comprend une source d'alimentation en courant continu du système, un premier transistor prévu pour être en conduction, par commande appropriée sur son électrode de commande, seulement pendant les périodes séparant les impulsions du signal d'interrogation, des deuxième et troisième transistors prévus pour n'être en conduction que pendant les impulsions du signal d'interrogation et commandés à cet effet par l'interruption de conduction dudit premier transistor, et des résistances associées à ces transistors pour leurs commande et polarisation correctes ;

(B) en ce que chaque station locale destinée à recevoir le signal d'interrogation émis par l'étage de sortie du poste central et à renvoyer vers celui-ci un signal de réponse personnalisé traduisant l'état d'un ou de plusieurs circuits de détection présents dans cette station, comprend un circuit de chargement de séquence, prévu pour le stockage temporaire d'un mot numérique d'identification propre à ladite station et composé à cet effet d'un réseau série, à diode et condensateur, placé en parallèle sur le bus et relié à l'entrée d'une roue codeuse dont les N sorties permettent de définir ledit mot numérique d'identification à N bits avec $2^n$ supérieur ou égal au nombre M des stations, un circuit de discrimination pour la validation de ce mot, un circuit de comparaison entre ledit mot numérique stocké temporairement et un mot numérique de référence, et un circuit de restitution d'informations personnalisées au poste central lorsqu'il y a identité entre les mots comparés.

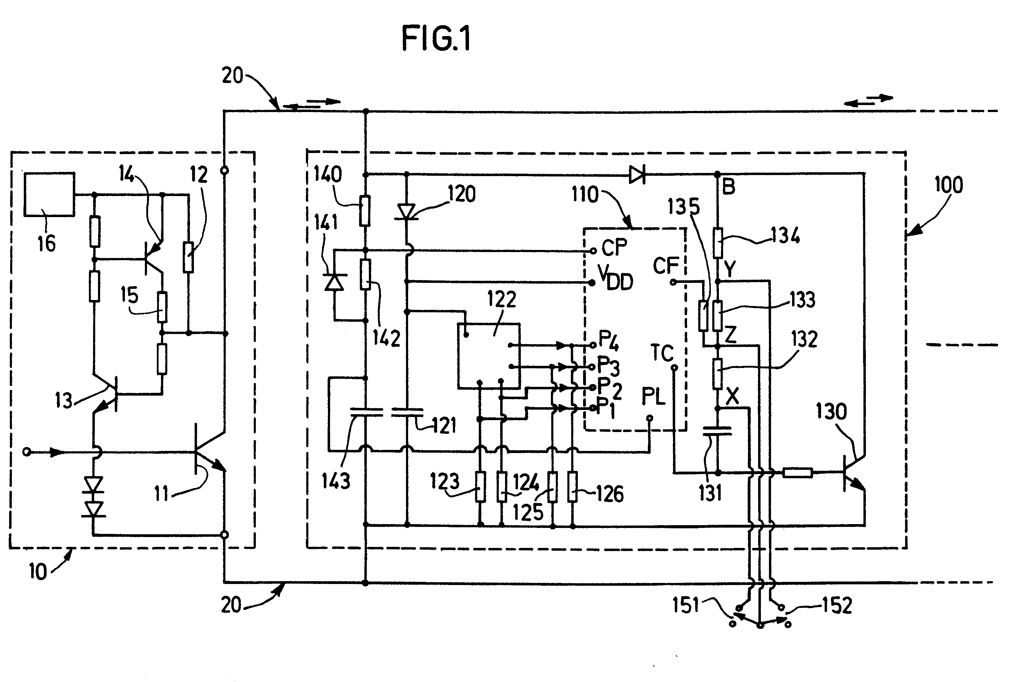

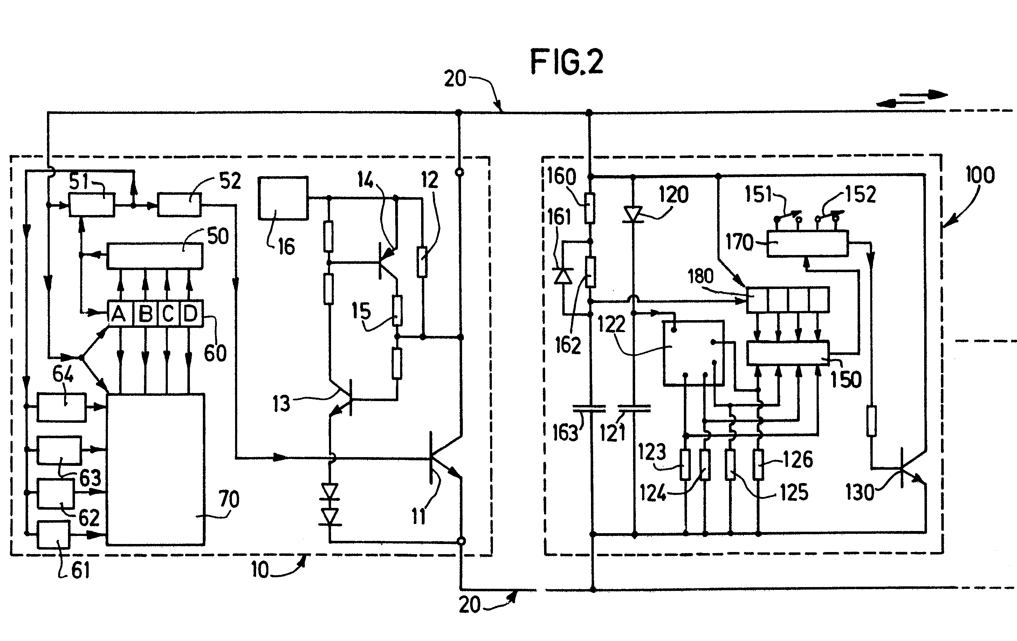

Les particularités et avantages de cette invention apparaissent en fait de façon plus détaillée dans la description qui suit et dans les dessins annexés, donnés à titre d'exemples non limitatifs et dans lesquels les figures 1 et 2 montrent respectivement un premier et un deuxième mode de réalisation de l'invention.

Le système d'identification de stations décrit en référence à la figure 1 comprend d'une part un poste central d'interrogation 10 et d'autre part toute une série de stations locales 100, 200, 300, etc..., placées en parallèle les unes par rapport aux autres et par rapport au poste central 10, le long des deux connexions d'un bus de transmission 20 (seule la station 100 apparaît sur les figures, les stations suivantes ayant une structure et un fonctionnement identiques).

Le poste central 10 comprend un transistor 11 NPN commandé par la base et dont le collecteur est relié à une source de tension 16, ici de 12 volts, par l'intermédiaire d'une résistance 12. Initialement, le transistor 11 est bloqué et la tension d'alimentation, présente sur le collecteur de ce transistor, est transmise par le bus 20 pour être fournie à chacune des stations 100, 200, 300, etc. Simultanément, le poste central 10 émet un signal dit de chargement, constitué d'une impulsion rectangulaire de durée assez longue et dont l'utilisation est décrite ci-dessous.

En parallèle sur le bus 20 sont donc prévues les stations 100, 200, 300, etc..., identiques et dont on ne décrira que la première, la station 100. La station 100 a pour composant essentiel un circuit décompteur à chargement parallèle 110, avec détection de l'état 0 0 0 0 (exprimé ici par 4 bits) ; un composant de ce type est disponible par exemple chez Signetics, sous la référence HEF 4526 B. Ce circuit 110 reçoit sur une borne $V_{DD}$ la tension d'alimentation (ici 12 volts) transmise par le bus 20, par l'intermédiaire d'une diode 120 et d'un condensateur 121 dont l'association constitue un circuit RC à grande constante de temps. Ce circuit RC permet également, par l'intermédiaire d'une roue de codage 122 à une entrée et quatre sorties auxquelles sont associées respectivement quatre résistances 123 à 126 reliées à la masse par leur autre extrémité, d'assurer le chargement, sur les quatre bornes $P_1$ à $P_4$ du circuit décompteur 110, d'une séquence numérique de 4 bits propre à chaque station et qui en constitue donc un mot d'identification. Ce chargement n'est cependant autorisé que lorsqu'une valeur de seuil déterminée a été atteinte, c'est-à-dire seulement si le signal transmis par le bus 20 a été à son niveau haut suffisamment longtemps. Le réseau constitué par les résistances 140, 142, la diode 141 et le condensateur 143 assure la discrimination entre les signaux de commande de chargement, appliqués sur la borne PL du circuit décompteur 110, et les autres signaux qui constituent, comme on le verra plus loin, les impulsions d'interrogation proprement dites.

La valeur du mot d'identification est liée à la position de la roue codeuse 122, qui est un organe de liaison électrique tel que décrit dans la demande de brevet n° 82 12 445 déposée le 16 juillet 1982 par la société demanderesse. Cette demande, non encore publiée, décrit en effet un organe de liaison -notamment de liaison électrique- entre un nombre déterminé n de voies en parallèle distinctes et une voie commune, et qui comprend, pour l'établissement des $2^n$ combinaisons distinctes de liaisons possibles entre cette voie commune et les n voies distinctes, $2^{n-1}$ bras de liaison répartis circulairement autour de la partie centrale de l'organe dans $2^{n-1}$ positions parmi $2^n$ possibles, ces $2^{n-1}$ positions étant choisies de façon que des permutations circulaires pas-à-pas successives de cet organe établissent l'une après l'autre chacune de ces $2^n$ combinaisons distinctes de liaisons possibles entre la voie commune et les n voies en parallèle. Dans le cas présent, cet organe est un contacteur électrique entre une connexion commune et quatre connexions en parallèle distinctes, reliées respectivement aux bornes $P_1$ à $P_4$ du circuit décompteur 110, ce qui implique que le système d'identification ici décrit peut comprendre jusqu'à seize stations distinctes. Il ne s'agit cependant pas là d'une limitation de l'invention, et, pour pouvoir raccorder un nombre de stations supérieur, il suffit de prévoir un contacteur électrique dans lequel, selon la demande de brevet citée, on choisit n en conséquence, ou bien de prévoir, dans le cas d'un nombre de stations élevé, deux contacteurs ou plus en cascade.

Le chargement des mots de 4 bits étant ainsi effectué dans chaque station locale, la mise en conduction du transistor 11 dans le poste central 10, par commande sur sa base, ramène la tension sur le bus 20 d'abord à un niveau bas (environ 2 volts), ce qui entraîne directement le blocage des transistors 13 et 14 normalement conducteurs, la continuité électrique sur le bus restant cependant assurée grâce à la résistance 12 placée en parallèle sur le transistor 14 et la résistance 15 en série. Ensuite le transistor 11 se sature et le niveau de tension sur le bus 20 est à zéro, à la tension de saturation près. La phase de chargement des circuits décompteurs des stations locales sur commande de cette première impulsion dite de synchronisation, envoyée par le poste central, est terminée.

La phase suivante, dite d'interrogation, se déroule de la façon suivante. Le poste central 10 transmet, après l'impulsion dite de synchronisation de la phase précédente, une suite d'impulsions qui sont toutes reçues par les stations locales. Une première caractéristique de ces impulsions d'interrogation est leur moindre durée par rapport à celle de l'impulsion de synchronisation, afin que la valeur de seuil au-dessus de laquelle sont effectués les chargements des circuits décompteurs des stations locales ne soit atteinte en aucun cas et que la borne PL du circuit décompteur 110 ne soit pas sollicitée par le réseau de discrimination 140, 141, 142, 143. Une deuxième caractéristique de ces impulsions est qu'elles déclenchent chacune sur leur front descendant (passage du niveau haut au niveau bas) l'action -détaillée plus loin- des

circuits décompteurs, en synchronisme les uns avec les autres puisqu'un seul signal d'horloge commande ces circuits. Ce retour au niveau bas des impulsions d'interrogation est obtenu à l'aide de signaux impulsionnels brefs envoyés comme précédemment sur la base du transistor 11 du poste central 10 pour mettre en conduction ce transistor et, par suite, bloquer les transistors 13 et 14 et amener la tension sur le bus à son niveau bas. Au moment de ce passage, le signal reçu sur l'entrée d'horloge CP des circuits décompteurs fait baisser d'une unité la valeur des mots distincts de 4 bits introduits initialement dans ces circuits (pendant la phase de chargement). Tant que l'état 0 0 0 0 n'est pas atteint pour l'un de ces mots dans l'un des circuits décompteurs, la borne TC de ces circuits décompteurs est au niveau bas (sensiblement 0,1 à 0,2 volt). Lorsque l'un des circuits décompteurs, par exemple le circuit 110, atteint cet état 0 0 0 0, et puisque la tension sur la borne CF est à l'état haut, la tension sur la borne TC passe à son niveau haut (environ 12 volts) et, au même moment, la tension au point X, séparée de TC par un condensateur 131, augmente de la même quantité. Cette tension en X, comme celle en Z, Y et B était de 12 volts avant l'arrivée du contenu du circuit décompteur 110 dans son état 0 0 0 0. Le passage de TC de 0 à 12 volts entraîne alors la conduction du transistor 130 et, par suite, le maintien de la tension en B à zéro, aussi longtemps du moins que la tension sur la borne CF du circuit décompteur 110 reste au-dessus d'une valeur de seuil déterminée (ici environ 5,5 volts). De ce maintien de la conduction du transistor 130 et du niveau bas en B, il résulte que le niveau bas de la dernière impulsion d'interrogation se prolonge. Cela constitue une troisième caractéristique des impulsions d'interrogation, à savoir que les niveaux bas qui les suivent peuvent avoir différentes durées, cet allongement de durée se produisant donc lorsqu'un circuit décompteur a vu le mot numérique qui lui est propre atteindre la valeur 0 0 0 0 et que la station locale correspondante, s'étant alors considérée comme spécialement reconnue et interrogée, est en mesure d'adresser en retour au poste central 10 une réponse spécifique consistant en une modulation de la durée du niveau de l'impulsion d'interrogation. Dès que la tension au point intermédiaire Z, situé entre X et Y et séparé d'eux par une impédance 132 et une résistance 133 respectivement, décroît suffisamment pour que la tension sur la borne CF descende au-dessous du seuil de 5,5 volts, la tension sur la borne TC repasse à son niveau bas (en transmettant ce retour à zéro en même temps à la borne CF, par l'intermédiaire du condensateur 131 et des impédances 132 et 135) et la conduction du transistor 130 s'interrompt donc, ce qui, corrélativement, met fin à l'état bas observé après l'impulsion d'interrogation puisque la tension en B est ainsi portée à nouveau à 12 volts.

On vient de décrire comment la réponse d'une station locale à l'impulsion qui lui correspond en propre dans le signal d'interrogation envoyé par le poste central se traduisait par un allongement de la durée de l'intervalle de temps qui sépare ladite . impulsion de l'impulsion suivante (correspondant, elle, à une autre station locale). En fait, chaque station locale a pour rôle de transmettre un certain nombre d'informations : dans le cas d'un système de surveillance et d'alarme par exemple, on peut prévoir qu'une station aura à informer le poste central 10 (a) de la pénétration d'une personne dans un local (b) d'une tentative d'effraction, l'absence ou l'existence de tels événements se traduisant par la fermeture ou l'ouverture d'un contact électrique. Pour que la réponse d'une station locale ait un intérêt pour le poste central, il est donc nécessaire qu'elle contienne ces informations "tel contact ouvert", "tel contact fermé", etc..., ce qui est réalisé ici par une modulation de la durée de l'intervalle de temps entre les impulsions d'interrogation successives.

Cette modulation de largeur est réalisée de la façon suivante : lors du passage de la tension sur le bus à son niveau bas, la tension sur la borne TC passe à 12 volts environ pour la station qui se reconnaît comme interrogée et met le transistor 130 dans son état de conduction, de façon à maintenir le court-circuit entre les deux connexions du bus pendant un temps variable déterminé par la constante de temps des différents circuits de type RC que peuvent constituer le condensateur 131 et les impédances 132, 133, 134 selon leur combinaison en fonction des positions des deux contacts électriques 151 et 152 (l'ouverture du contact 151 correspondant par exemple à une tentative de sabotage et celle du contact 152 à une détection d'intrusion).

Le mode de réalisation qui vient d'être décrit concerne un système dans lequel le signal impulsionnel d'interrogation transféré le long du bus n'est actif qu'au niveau des transitions niveau haut-niveau bas. Une variante de réalisation peut être proposée dans laquelle un rôle actif est également dévolu aux transitions niveau bas-niveau haut du signal d'interrogation, à savoir celui d'une modulation de durée du signal d'interrogation, dans le but de disposer d'une possibilité d'accès aléatoire aux stations, et non plus seulement séquentiel.

Le système d'identification de stations correspondant est représenté sur la figure 2 et son fonctionnement est le suivant. Comme précédemment, une première phase de chargement permet, par l'intermédiaire du même circuit comprenant la diode 120, le condensateur 121, la roue de codage 122 et les résistances 123 à 126, d'envoyer non plus sur un circuit décompteur, mais sur les quatre entrées dites premières d'un comparateur numérique 150, un mot de 4 bits, bien entendu différent d'une station locale à l'autre. Le réseau composé des résistances 160 et 162, de la diode 161 et du condensateur 163 détermine l'instant effectif de prise en compte de ce mot, qui est en fait appliqué au comparateur 150 tant que le condensateur 121 est à l'état haut, c'est-à-dire en permanence tant que les impulsions arrivent régulièrement sur le bus 20.

Le chargement étant ainsi effectué dans chaque station locale, la mise en conduction du transistor 11 du poste central, amène la tension sur le bus à son niveau bas, après une durée de l'état haut fixée dans le poste central 10 par le signal de sortie d'un générateur de fonction logique 50 : par exemple durée longue si ce signal de sortie est 0 et durée brève si ce signal est 1. Après écoulement d'une période d'inhibition T dans la bascule monostable 51 à la suite de cette transition haut/bas, quatre fenêtres temporelles de durées distinctes sont générées à l'aide de bascules monostables 61 à 64 (fenêtres grâce auxquelles les réponses des stations locales pourront être différenciées comme on le verra plus loin). En même temps, dans un registre à décalage 160, 260, etc... de chaque station locale 100, 200, etc..., est introduit un 1 ou un 0 selon la durée longue ou brève de l'état haut du bus avant conduction du transistor 11 (c'est-à-dire avant réponse de la station), ce signal numérique étant disponible en sortie du circuit de discrimination constitué des éléments 160, 161, 162 et 163. Cette opération étant répétée, après quatre introductions dans le registre 160, celui-ci contient le mot numérique que l'on avait choisi d'émettre dans le poste central 10 et qui sera également présent dans un registre à décalage 60. Ce mot numérique est envoyé sur quatre entrées dites deuxièmes du comparateur numérique 150, qui détecte ou non l'identité entre le mot reçu au cours de l'interrogation par le poste central 10 et le mot chargé par l'intermédiaire de la roue codeuse 122. En cas d'identité, une bascule monostable 170 est déclenchée et génère un impulsion dont la durée est, comme dans le cas du premier mode de réalisation décrit, fonction de la position des deux contacts électriques 151 et 152. Cette durée est aussi la durée de conduction du transistor 130, qui fonctionne comme précédemment. La fin de la conduction intervient donc à quatre instants différents selon la position de ces contacts. Cette position peut donc être connue à partir de l'observation de l'état des bascules monostables 61 à 64 dont, à l'instant de fin de conduction du transistor 130, certaines sont encore actives et d'autres pas. L'indication des états de ces quatre bascules est alors introduite par quatre voies en parallèle dans une mémoire 70 recevant par quatre autres voies en parallèle l'indication de l'état du registre 60. Ainsi, après un cycle d'interrogation complet des stations locales 100, 200, etc..., le contenu de la mémoire reflète exactement les états des contacts électriques de ces stations, et l'on peut, ainsi, avoir accès à n'importe quelle station locale, en quatre étapes seulement.

Bien entendu, la présente invention n'est pas limitée aux exemples de réalisation qui viennent d'être décrits et représentés, à partir desquels des variantes peuvent être proposées sans pour cela sortir du cadre de l'invention. En particulier, on n'a décrit ci-dessus que le déroulement d'une seule séquence d'interrogation des stations locales par le poste central. Il n'est pas rare, dans le domaine de la surveillance, que la détection d'un changement d'état observé une seule fois ou de façon fugitive doive être considérée comme une fausse alarme. Une telle alarme ne sera alors confirmée que si la détection se produit lors de plusieurs cycles d'interrogation successifs.

Par ailleurs, le système décrit est limité à la possibilité d'interrogation de seize stations locales, puisque les mots numériques propres à chacune d'entre elles n'ont que quatre bits. Il est évident qu'il ne s'agit pas là d'une limitation de l'invention, et que l'éventail des mots numériques distincts possibles doit être adapté au nombre des stations à connecter au système et donc être au moins égal à celui-ci.

REVENDICATIONS :

1.      Système d'identification de stations comprenant un poste central d'interrogation (10) et M stations locales (100), (200), (300), etc... placées en parallèle les unes par rapport aux autres le long d'un bus de transmission (20) les reliant audit poste central, caractérisé :

(A) en ce que l'étage de sortie du poste central (10), destiné à émettre un signal d'interrogation desdites stations composé d'une impulsion de synchronisation d'une première durée du niveau haut et de M impulsions d'interrogation d'une deuxième durée du niveau haut, comprend une source (16) d'alimentation en courant continu du système, un premier transistor (11) prévu pour être en conduction, par commande appropriée sur son électrode de commande, seulement pendant les périodes séparant les impulsions du signal d'interrogation, des deuxième et troisième transistors (13) et (14) prévus pour n'être en conduction que pendant les impulsions du signal d'interrogation et commandés à cet effet par l'interruption de conduction dudit premier transistor (11), et des résistances associées à ces transistors pour leurs commande et polarisation correctes ;

(B) en ce que chaque station locale, telle que (100) par exemple, destinée à recevoir le signal d'interrogation émis par l'étage de sortie du poste central (10) et à renvoyer vers celui-ci un signal de réponse personnalisé traduisant l'état d'un ou de plusieurs circuits de détection présents dans cette station, comprend un circuit de chargement de séquence, prévu pour le stockage temporaire d'un mot numérique d'identification propre à ladite station et composé à cet effet d'un réseau série, à diode (120) et condensateur (121), placé en parallèle sur le bus et relié à l'entrée d'une roue codeuse (122) dont les N sorties permettent de définir ledit mot numérique d'identification à N bits avec $2^n$ supérieur ou égal au nombre M des stations, un circuit de discrimination pour la validation de ce mot, un circuit de comparaison entre ledit mot numérique stocké temporairement et un mot numérique de référence, et un circuit de restitution d'informations personnalisées au poste central (10) lorsqu'il y a identité entre les mots comparés.

2. Système selon la revendication 1, caractérisé en ce que le circuit de comparaison comprend un circuit décompteur tel que (110), prévu pour réduire d'une unité la valeur du mot numérique stocké temporairement chaque fois qu'il reçoit une impulsion d'interrogation et changer d'état lorsque ce mot numérique atteint la valeur nulle.

3. Système selon la revendication 1, caractérisé en ce que le circuit de comparaison comprend une roue codeuse (122), un registre (160) et un comparateur numérique (150) prévu pour changer d'état lorsqu'il y a identité entre le contenu du registre et l'état de la roue codeuse.

4. Système selon la revendication 3, caractérisé en ce que l'étage de sortie du poste central (10) comprend, pour la commande du premier transistor (11) par le signal d'interrogation, des moyens de génération d'un signal composé d'impulsions d'interrogation de deux durées distinctes et se succédant de telle manière que, parmi les combinaisons successives de N impulsions d'interrogation consécutives de ce signal, au moins M d'entre elles soient distinctes pour pouvoir constituer autant de séquences numériques d'identification desdites stations locales.

5. Système selon l'une des revendications précédentes, caractérisé en ce que le circuit de restitution d'informations personnalisées comprend des circuits de type RC de constantes de temps distinctes selon la position d'ouverture ou de fermeture de contacts électriques, de façon à commander, lorsque la station concernée est interrogée, l'envoi d'impulsions de réponse de durées distinctes de façon correspondante.

FIG.1

FIG.2

Office européen
des brevets

## RAPPORT DE RECHERCHE EUROPEENNE

EP 83 20 1697

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 343 288 (THE LAITRAM CORP.) <br> * Page 7, ligne 18 - page 10, ligne 8; figure 5 * | 1-3 | H 04 Q 9/14 |
| | --- | | |
| A | FR-A-2 438 864 (MASI) <br> * En entier * | 1 | |
| | --- | | |
| A | GB-A-2 072 467 (FUJI ELECTRIC) <br> * Page 4, ligne 1 - page 6, ligne 112; figures 1-4 * | 1,3,4 | |
| | --- | | |
| A | WO-A-8 102 962 (YONG) <br> * Page 3, ligne 28 - page 10, ligne 14; figures 1-3 * | 1 | |
| | --- | | DOMAINES TECHNIQUES RECHERCHES (Int. Cl. ³) |
| A | FR-A-2 370 394 (THE BENDIX CORP.) <br> * Page 5, ligne 10 - page 6, ligne 41; page 7, ligne 5 - page 10, ligne 40; figures 1-5 * | 1,3-5 | H 04 Q 9/00 |
| | ----- | | |

Le présent rapport de recherche a été établi pour toutes les revendications

| Lieu de la recherche <br> LA HAYE | Date d'achèvement de la recherche <br> 13-02-1984 | Examinateur <br> WANZEELE R.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO Form 1503 03 82